Europäisches Patentamt

European Patent Office

Office européen des brevets

(11) Publication number: **0 254 880 B1**

(12) **EUROPEAN PATENT SPECIFICATION**

(45) Date of publication of patent specification: **19.02.92**  (51) Int. Cl.⁵: **H02G 5/06**

(21) Application number: **87109234.2**

(22) Date of filing: **26.06.87**

(54) **Gas-insulated high voltage device.**

(30) Priority: **30.06.86 SE 8602898**

(43) Date of publication of application:
**03.02.88 Bulletin 88/05**

(45) Publication of the grant of the patent:
**19.02.92 Bulletin 92/08**

(84) Designated Contracting States:
**CH DE FR LI**

(56) References cited:
**DE-A- 2 526 671**
**FR-A- 1 487 722**
**FR-A- 2 173 753**
**FR-A- 2 483 695**

(73) Proprietor: **ASEA AB**

**S-721 83 Västeras(SE)**

(72) Inventor: **Classon, Ake**
**Box 9544**
**S-771 00 Ludvika(SE)**

(74) Representative: **Boecker, Joachim, Dr.-Ing.**
**Rathenauplatz 2-8**
**W-6000 Frankfurt a.M. 1(DE)**

Rank Xerox (UK) Business Services

## Description

The invention relates to a gas-insulated high voltage device according to the precharacterising part of Claim 1. The device may, for example, be a switchgear or a tubular cable, in which the insulation between the live part of the device and the surrounding metal enclosure consists of insulating gas, for example sulphur hexafluoride ($SF_6$).

In gas-insulated switchgear (GIS) a large number of insulators of thermosetting resin are used. Usually, these insulators have an O-ring seal against a lateral or surrounding wall of the metal enclosure. The O-rings form a seal between the space filled with pressurized gas and the surroundings as well as - often - between separate gas-filled spaces in the switchgear. In addition, the sealing joint is often formed such that the insulator body can "float" between two O-rings, i.e. the O-rings prevent direct contact between the metal enclosure and the relatively brittle thermosetting resin of the insulators, which could otherwise be damaged by locally high pressures at the contact points.

DE-A-2 526 671 discloses a device of the afore-mentioned kind, in which the insulator is provided with a surrounding metallic supporting ring, which prevents direct thrust load of the peripheral part of the insulator. This design, which includes two separate O-rings arranged in surrounding slots on either side of the insulator, has, among other things, the drawback that gluing or other means must be resorted to in order to fix the O-rings in the correct position during mounting. The types of glue which are usually used for temporary fixing of conventional O-rings and which cope with the special demands in $SF_6$-insulated switchgear, are often difficult to dose and apply in an accurate and controllable manner. Any surplus of glue increases the risk of a breakdown.

Another drawback with gas-insulated switchgear with seals of conventional design is that when docking switchgear apparatus together, in which the insulator forms a partition, the apparatus enclosures rub against each others metal flanges or against the supporting ring of the insulator. This involves a considerable risk of generating small metal chips or other particles, which may enter the space inside the enclosure and subsequently cause a breakdown.

SE-A-7513535-0 shows a flange joint which has only one O-ring and which is relatively easy to install since the O-ring can be placed around the peripheral part of the insulator, whereby no means such as glue or the like need be resorted to in order to keep the ring in the correct position during installation. However, in this embodiment the advantage that the insulator is kept "floating" between the enclosure flanges at a certain distance from the latter with the help of O-rings is not obtained.

The object of the invention is to develop a gas-insulated high voltage device of the above-mentioned kind which does not suffer the afore-mentioned drawbacks of the prior devices of this kind.

To achieve this aim the invention suggests a gas-insulated high voltage device according to the introductory part of Claim 1, which is characterized by the features of the characterizing part of Claim 1.

Further developments of the invention are characterized by the features of the additional claims.

An important advantage of the invention is that the seal is kept in position by its own force by means of the elasticity of the sealing material. This permits the insulator to be installed in any arbitrary position without, for example, gluing or the use of other means to fix the O-rings in their correct positions. Since all type of gluing is eliminated with this type of seal, the installation is considerably simpler and cheaper than in comparable prior art designs. At the same time, the reliability in operation of the GIS plant is increased.

Another important advantage with the embodiment according to the invention is that the bridge forms a protective casing around the peripheral edge of the insulator during handling and installation. When docking switchgear apparatus together, where the insulator forms a partition and is provided with a seal according to the invention, the metal flanges join over the rubber bridge, which eliminates the risk of generating metal chips. The assembled seal is, moreover, less expensive to manufacture than two separate O-rings.

The invention will now be described in greater detail with reference to the accompanying drawings showing - by way of example - in

Figure 1   an axial section through a flange joint of a device in a GIS plant, formed in accordance with the invention,

Figure 2   a cross section of a rubber bridge included in the joint according to Figure 1.

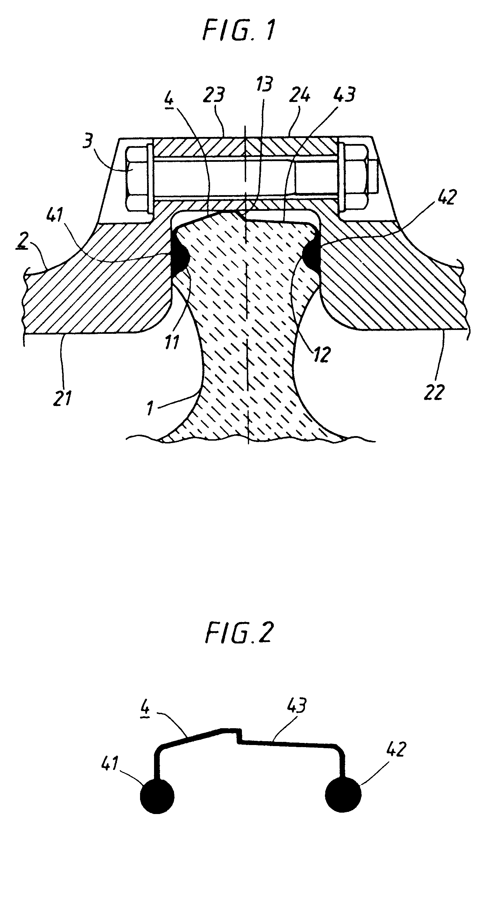

Figure 1 shows a portion of a disc-shaped insulator 1, which supports one or more electric conductors (not shown), and which is attached in a tubular, grounded metal enclosure 2. The enclosure 2 consists of tube sections 21,22, arranged axially one after the other and provided with flanges 23,24 which are screwed together by means of a screw joint 3.

The peripheral part of the insulator 1 is provided with two slots 11,12, each of which extends around the peripheral part facing one of the enclosure flanges 23,24, and accommodating an O-ring 41,42 of a sealing member 4. Figure 2 shows a cross-section of the sealing member 4 in unstrained condition. It consists of the two O-rings 41,42 which are retained by a bridge 43 of the same material as the O-rings. A suitable material is, for example, chloroprene or EPDM rubber.

During installation, the seal is fitted over the edge of the insulator 1 and kept in position by means of the elasticity of the sealing material. Thereafter, the insulator 1 is placed in the flange 23 of the enclosure section 21, where it is temporarily kept in position by mounting supports (not shown) which engage a shoulder 13 on the peripheral surface of the insulator 1. Then, when the tube section 22 is to be connected to the flange 23, these mounting supports can be removed. As will be clear from Figure 2, the bridge 43 of the sealing member 4 is formed so as to fit the peripheral surface of the insulator 1 with its shoulder 13 for mounting supports.

The flanges 23,24 of the tube sections, which are identical, are formed so as to extend over and completely surround the peripheral surface of the insulator 1. Since the peripheral surface is conically tapering in a direction away from the mid-portion of the surface towards the two sides of the insulator 1, the docking of the tube sections is facilitated. This causes the metal flanges to enter over the rubber bridge 43, and the contact between the flange surfaces takes place over the mid-portion of the peripheral surface of the insulator 1. This eliminates the risk of any metal chips, thus forming, entering the inside of the enclosure.

## Claims

1. Gas-insulated high voltage device comprising at least one electric conductor which is enclosed in a tubular metal enclosure (2) consisting of at least two tube sections (21,22) arranged axially one after the other, and joined together by means of flanges (23,24) holding between themselves a disc- or funnel-shaped support insulator (1) for said at least one conductor, with a sealing member (4) being arranged between the support insulator (1) and said flanges (23,24), **characterized** in that said sealing member (4) comprise two sealing rings (41,42) arranged on either side of the insulator (1) and being retained by a bridge (43) made of the same material as the rings and surrounding the periphery of the insulator (1).

2. Device according to Claim 1, **characterized** in that the flanges (23,24) extend over the peripheral surface of the insulator (1), thus completely surrounding this surface.

3. Device according to Claim 1 or 2, **characterized** in that the peripheral surface of the insulator (1) is formed with a shoulder (13) for mounting supports.

4. Device according to Claim 1,2 or 3, **characterized** in that the flanges (23,24) are identical.

5. Device according to any of the preceding Claims, **characterized** in that the peripheral surface of the insulator (1) is conically tapering in a direction away from the mid-portion of the surface and towards the two sides of the insulator (1).

6. Device according to any of the preceding Claims, **characterized** in that the sealing member (4) is made of synthetic rubber, for example EPDM rubber.

## Revendications

1. Dispositif à haute tension à isolation gazeuse, comprenant au moins un conducteur électrique qui est contenu dans une enceinte métallique tubulaire (2) constituée par au moins deux sections de tube (21, 22) disposées axialement l'une après l'autre, et réunies ensemble au moyen de brides (23, 24), maintenant entre elles un isolateur de support en forme de disque ou d'entonnoir (1), pour le ou les conducteurs précités, avec un élément d'étanchéité (4) disposé entre l'isolateur de support (1) et les brides (23, 24), **caractérisé** en ce que l'élément d'étanchéité (4) comprend deux joints toriques d'étanchéité (41, 42) qui sont disposés de part et d'autre de l'isolateur (1) et qui sont retenus par un pont (43) constitué par le même matériau que les joints toriques, et qui entoure la périphérie de l'isolateur (1).

2. Dispositif selon la revendication 1, **caractérisé** en ce que les brides (23, 24) s'étendent au-dessus de la surface périphérique de l'isolateur (1), de façon à entourer complètement cette surface.

3. Dispositif selon la revendication 1 ou 2, **caractérisé** en ce que la surface périphérique de l'isolateur (1) comporte un épaulement (13) pour le montage de supports.

4. Dispositif selon la revendication 1, 2 ou 3, **caractérisé** en ce que les brides (23, 24) sont identiques.

5. Dispositif selon l'une quelconque des revendications précédentes, **caractérisé** en ce que la surface périphérique de l'isolateur (1) présente une forme tronconique allant en diminuant dans des directions qui vont de la partie médiane de la surface vers les deux côtés de l'isolateur (1).

6. Dispositif selon l'une quelconque des revendications précédentes, **caractérisé** en ce que l'élément d'étanchéité (4) est constitué par du caoutchouc synthétique, par exemple du caoutchouc EPDM.

**Patentansprüche**

1. Gasisolierte Hochspannungseinrichtung mit mindestens einem elektrischen Leiter, der in einer rohrförmigen Metallhülle (2) eingeschlossen ist, welche aus mindestens zwei Rohrabschnitten (21, 22) besteht, die in axialer Richtung hintereinander angeordnet sind und mittels Flansche (23, 24) miteinander verbunden sind, die zwischen sich einen scheibenförmigen oder trichterförmigen Tragisolator (1) für den genannten mindestens einen Leiter halten, wobei ein Dichtungsglied (4) zwischen dem Tragisolator und den genannten Flanschen (23, 24) angeordnet ist, **dadurch gekennzeichnet**, daß das Dichtungsglied (4) zwei Dichtungsringe (41, 42) aufweist, von denen je einer an einer Seite des Isolators (1) angeordnet ist und die von einer Brücke (43) zusammengehalten werden, die aus dem gleichen Material wie die Ringe besteht und die Peripherie des Isolators (1) umgibt.

2. Einrichtung nach Anspruch 1, **dadurch gekennzeichnet**, daß die Flansche (23, 24) sich über die periphere Oberfläche des Isolators (1) erstrecken und so diese Oberfläche vollständig umgeben.

3. Einrichtung nach einem der Ansprüche 1 oder 2, **dadurch gekennzeichnet**, daß die periphere Oberfläche des Isolators (1) eine Schulter (13) als Montagestütze aufweist.

4. Einrichtung nach einem der Ansprüche 1, 2 oder 3, **dadurch gekennzeichnet**, daß die Flansche (23, 24) identisch sind.

5. Einrichtung nach einem der vorhergehenden Ansprüche, **dadurch gekennzeichnet**, daß die periphere Oberfläche des Isolators (1) sich von dem Mittelteil der Oberfläche zu den beiden Seiten des Isolators (1) hin konisch verjüngt.

6. Einrichtung nach einem der vorhergehenden Ansprüche, **dadurch gekennzeichnet**, daß das Dichtungsglied (4) aus synthetischem Gummi, zum Beispiel EPDM-Gummi, besteht.

## FIG. 1

## FIG.2